Europäisches Patentamt

European Patent Office

Office européen des brevets

(11) Veröffentlichungsnummer: **0 120 419**
**B1**

(12) **EUROPÄISCHE PATENTSCHRIFT**

(45) Veröffentlichungstag der Patentschrift:
13.08.86

(21) Anmeldenummer: **84102881.4**

(22) Anmeldetag: **16.03.84**

(51) Int. Cl.⁴: **B 29 B 7/74**

(54) Anlage zum Herstellen von Artikeln aus zwei oder mehreren fliessfähigen Kunststoff-Reaktionskomponenten.

(30) Priorität: **19.03.83 DE 3309964**

(43) Veröffentlichungstag der Anmeldung:
**03.10.84 Patentblatt 84/40**

(45) Bekanntmachung des Hinweises auf die Patenterteilung:
**13.08.86 Patentblatt 86/33**

(84) Benannte Vertragsstaaten:
**AT BE CH FR GB IT LI NL SE**

(56) Entgegenhaltungen:
**DE-A-2 102 861**
**DE-A-2 814 688**
**DE-A-2 837 425**
**GB-A-1 126 873**
**GB-A-2 099 610**

(73) Patentinhaber: **Krauss- Maffei Aktiengesellschaft,
Krauss- Maffei- Strasse 2, D-8000 München 50 (DE)**

(72) Erfinder: **Ramisch, Heinrich, Dipl.- Ing.,
Baaderstrasse 29, D-8000 München 5 (DE)**

**Beschreibung**

Die Erfindung bezieht sich auf eine Anlage gemäß dem Oberbegriff des Patentanspruchs. Eine derartige Anlage ist aus der DE-A-28 37 425 bekannt.

Die aus der DE-A-28 37 425 bekannte Anlage zum Herstellen von Artikeln aus zwei Kunststoff-Reaktionskomponenten weist für jede Reaktionskomponente einen Vorratsbehalter auf, der zu einer Mischvorrichtung führt, wo die Reaktionskomponenten unter Druck vermischt und anschließend in eine Form ausgetragen werden. Die Dosierung jeder Reaktionskomponente erfolgt mit Hilfe eines Kolben-Dosieraggregates, das einen auf die Reaktionskomponente einwirkenden Dosierkolben aufweist, der mit einem Antriebskolben verbunden ist. Der Zylinderraum jedes Antriebskolbens liegt in einem zugehörigen Hydraulikkreis, wobei jeder Hydraulikkreis einzeln von einer steuerbaren Pumpe angetrieben wird. Eine gemeinsame Pumpe für alle Hydraulikkreise vorzusehen ist nicht sinnvoll, da sich in den einzelnen Hydraulikkreisen unterschiedliche Verhältnisse zumal dann ergeben, wenn bei den einzelnen Antriebskolben unterschiedliche Geschwindigkeiten eingestellt werden sollen, die unterschiedliche Fördermengen erfordern.

Eine gemeinsame förderdruckgesteuerte Pumpe für mehrere Hydraulikkreise zum Antrieb reservierbarer Hydraulikkolben einer Erdbewegungsmaschine ist an sich aus der GB-A-11 26 873 bekannt. Um zu gewährleisten, daß als Steuerdruck für die Pumpe stets der höchste, auf einen Hydraulikkolben wirkende Förderdruck herangezogen wird, ist in den Druckrückführungsleitungen von den Hydraulikkreisen zu dem Steuereingang der Pumpe jeweils ein Rückschlagventil angeordnet. Die Hydraulikkreise lassen sich mit handbetätigbaren Wegeventilen steuern.

Es ist ferner bei einer Kunststoff-Spritzgießmaschine bekannt (GB-A-20 99 610), in dem Hydraulikkreis der Schließeinheit für die Spritzgießform ein Mengenregelventil anzuordnen, welches von einem Wegaufnehmer oder einem Druckmesser gesteuert wird.

Obwohl die Verwendung jeweils einer gesonderten Pumpe für jeden Hydraulikkreis einer eingangs erläuterten Anlage zum Herstellen von Artikeln aus zwei Kunststoff-Reaktionskomponenten insbesondere bei Anlagen mit kleinen Austragsleistungen, beispielsweise zur Herstellung von kleinen Artikeln von etwa 30 bis 3000g Stückgewicht, einen nicht unbeachtlichen Aufwand darstellt, scheiterte bislang aus den angegebenen Gründen die Anwendung von Techniken mit einer gemeinsamen Pumpe für beide Hydraulikkreise.

Die Aufgabe der Erfindung besteht darin, die eingangs erläuterte, bekannte Anlage dahingehend zu verbessern, daß bei gleichzeitiger Verringerung des Pumpenaufwandes für die Hydraulikkreise die Dosierung der Reaktionskomponenten genauer erfolgen kann.

Diese Aufgabe wird durch die kennzeichnenden Markmale des Patentanspruchs gelöst.

Bei der erfindungsgemäßen Anlage ist für alle Hydraulikkreise eine gemeinsame, förderdruckgesteuerte Pumpe vorgesehen, und zwar in Kombination mit Mengenregelventilen für jeden Hydraulikkreis, welche jeweils in Abhängigkeit von der Geschwindigkeit des zugeordneten Antriebskolbens gesteuert werden. Auf diese Weise läßt sich erreichen, daß die Geschwindigkeit des Dosierkolbens während des Förderhubs absolut konstant bleibt. Damit läßt sich selbst dann, wenn in der Mischphase und in der Nichtmischphase der Mischvorrichtung unterschiedliche Verhältnisse herrschen, die Fördermenge der einzelnen Reaktionskomponenten exakt einstellen. In der Nichtmischphase wird nach dem Stand der Technik jede Reaktionskomponente getrennt zum Vorratsbehälter zurückgeführt, so daß gegenüber der Mischphase ein anderer Leitungswiderstand vorhanden ist. Selbst wenn in der Nichtmischphase oder aus anderen Gründen die Geschwindigkeit der Antriebskolben und damit die Fördermenge der betreffenden Reaktionskomponenten zu Null wird, erlaubt die gewählte Pumpenart eine Nullförderung bei einem anstehenden Druck, ohne daß unwirtschaftlich arbeitende Überdruckventile vorgesehen werden müßten. Dabei gewährleisten die Rückschlagventile in den Druckrückführungsleitungen zu dem Steuereingang der förderdruckgesteuerten, einzigen Hydraulikpumpe, daß der jeweils höhere auf die Antriebskolben wirkende Druck als Steuerdruck herangezogen wird. Da die Drücke, unter denen die Reaktionskomponenten an die Mischvorrichtung herangeführt werden müssen bis zu 300 bar bei Druckunterschieden bis zu 100 bar betragen können, erweist sich diese Maßnahme als besonders wichtig für die Erzielung einer genaueren Dosierung jeder Reaktionskomponente, und zwar auch bei wechselnden Bedingungen, wozu auch eine Viskositätsänderung der fließfähigen Reaktionskomponenten gehört.

Ein weiterer Vorteil ergibt sich dadurch, daß in einfacher Weise von Hand oder automatisch die Kolbendosiervorrichtung beim Einfahren auf eine größere Geschwindigkeit schaltbar ist. Wenn nämlich bereits während des Einfahrens die spätere Normalgeschwindigkeit eingestellt ist, tritt eine Druckstabilisierung, d.h. der gewünschte konstante Druck, erst mit Verzögerung ein (aus Gründen wechselnder Temperatur, Viskosität und Beladung mit Luft). Die Einstellung einer höheren Geschwindigkeit als der Betriebsgeschwindigkeit bei der Inbetriabnahme der Dosiervorrichtung verkürzt somit deren Einfahrzeit.

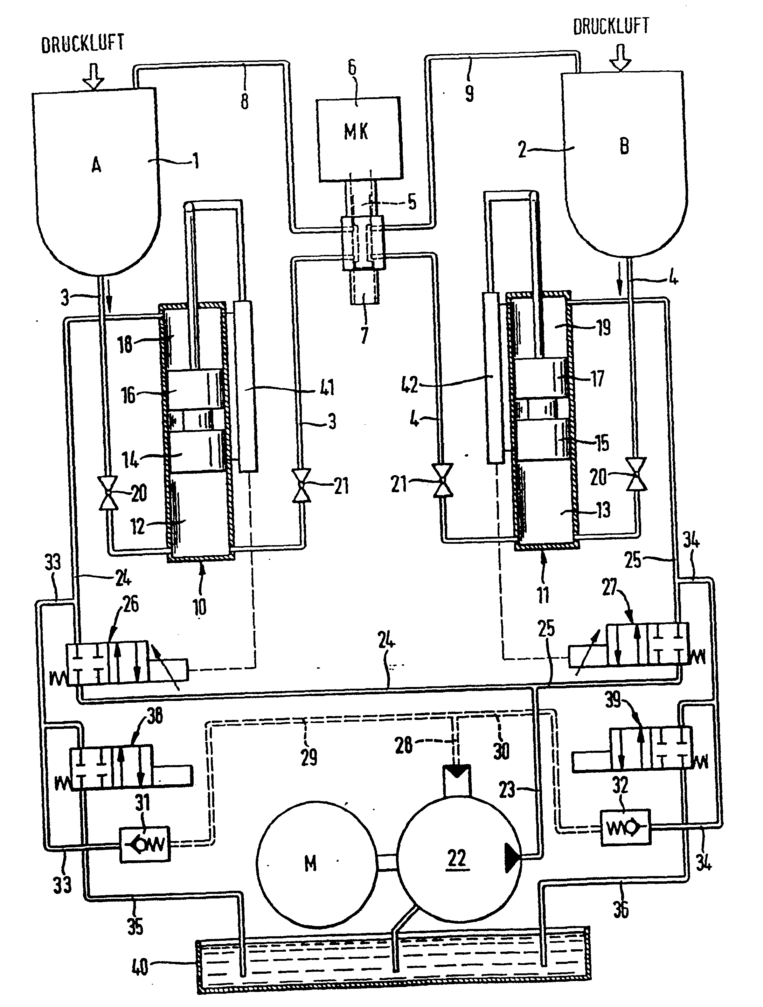

Die Erfindung wird anhand der Zeichnung an einem Ausführungsbeispiel erläutert. Unter einem gewissen Druck (Druckluft) stehende Vorsatztbehälter 1, 2 mit den beiden Reaktionskomponenten A und B sind über Leitungen 3, 4 mit einem Mischkopf MK verbunden. Dieser ist so ausgebildet, daß ein Verdrängerkolben 5, antreibbar durch einen Antrieb 6, in seiner oberen Endstellung (Mischphase) die Reaktionskomponenten A, B in eine Mischkammer des Mischkopfes MK eintreten läßt und die Mischung unten über eine Austrittsöffnung 7 in das Formwerkzeug od.dgl. austreten läßt. In der unteren Endstellung des Verdrängerkolbens 5 (Nichtmischphase) werden die Reaktionskomponenten A, B über Leitungen 8, 9 getrennt zu den Vorsatzbehältern 1, 2 zurückgeführt.

Die Leitungen 3, 4 stehen mit dem Kolbenraum 12 bzw. 13 je eines Kolben-Dosieraggregats 10 bzw. 11 in Verbindung. Der Dosierkolben 14 bzw. 15 wird von einem Antriebskolben 16 bzw. 17 angetrieben, wodurch bei entsprechender Schaltung von in den Leitungen 3, 4 angeordneten Ventilen 20, 21 bei der Aufwärtsbewegung der Dosierkolben 14, 15 die Reaktionskomponenten A, B aus den Vorsatzbehältern 1, 2 angesaugt und bei der Abwärtsbewegung zum Mischkopf gefördert werden, und zwar zumindest in der Mischphase mit einem erheblichen Druck (um 200 bar).

Die Zylinderräume 18, 19 der beiden Antriebskolben 16, 17 werden von einer gemeinsam von einem Motor M angetriebenen Pumpe 22 über Leitungen 23, 24, 25 mit einem Druckmedium versorgt. Mengenregelventile 26, 27 in den Leitungen 24, 25 ermöglichen die Steuerung der durchfließenden Menge, und zwar aufgrund von die Geschwindigkeit der Antriebskolben 16, 17 aufnehmenden und elektronisch mit der Sollgeschwindigkeit vergleichenden Potentiometern 41, 42. Die Pumpe 22 ist förderdruckgeregelt, und zwar über einen Steuereingang 28, der mit zwei Druckrückführungsleitungen 29, 30 verbunden ist, in denen Rückschlagventile 31, 32 angeordnet sind. Die Leitungen 29, 30 sind an Leitungsabschnitten 33, 34 angeschlossen, die ihrerseits in die Leitungan 24, 25 münden, und zwar zwischen dem Dosieraggregat 10 bzw. 11 und dem Mengenregelventil 26 bzw. 27. Von den Leitungsabschnitten 33, 34 gehen Leitungen 35 bzw. 36 aus, welche Wegeventile 38 bzw. 39 enthalten und zum Sumpfbehälter 40 der Pumpe 22 führen.

Mittels der Mengenregelventile 26, 27 und der Wegeventile 38, 39 lassen sich die Dosieraggregate 10, 11 steuern, und zwar durch Beaufschlagung der Antriebskolben 16, 17 im Sinne einer konstanten Geschwindigkeit der Dosierkolben 14, 15 während des Förderhubs (Bewegung der Dosierkolben 14, 15 nach unten entsprechend einer Zuführung der Reaktionskomponenten A, B zum Mischkopf MK) und einer Entlastung, bei der die Dosierkolben 14, 15 durch die unter dem Druck in den Vorsatzbehältern 1, 2 stehenden Reaktionskomponenten A, B nach oben bewegt werden und das Druckmedium aus den Zylinderräumen 18, 19 über die Leitungen 24, 25, 33 bis 36 drucklos abfließt.

Bei Druckbeaufschlagung der Antriebskolben 16, 17 wird der jeweils höhere Druck im Zylinderraum 18 oder 19 über die Leitungen 24, 33, 29 bzw. 25, 34, 30 und über den Steuereingang 28 an die Dosierpumpe 22 zu deren Förderdrucksteuerung weitergegeben, wobei das Rückschlagventil 31 bzw. 32 geöffnet und das andere Rückschlagventil 32 bzw. 31 geschlossen ist.

**Patentanspruch**

1. Anlage zum Herstellen von Artikeln aus zwei oder mehreren fließfähigen Kunststoff-Reaktionskomponenten (A, B) die jeweils aus einem Vorratsbehälter (1, 2) unter der Steuerung eines Dosierkolbens (14, 15) zu einer die Reaktionskomponenten (A, B) mischenden Vorrichtung (MK) geleitet werden, wobei jeder Dosierkolben (14, 15) von einem Antriebskolben (16, 17) angetrieben wird, dessen Zylinderraum (18, 19) in einem zugeordneten, geregelten Hydraulikkreis angeordnet ist, gekennzeichnet durch die Kombination folgender Merkmale.
- die Hydraulikkreise (24, 26, 33, 35, 38, 40 und 25, 27, 34, 36, 39, 40) werden von einer gemeinsamen, förderdruckgesteuerten Pumpe (22) angetrieben;
- in jedem Hydraulikkreis ist ein Mengenregelventil (26 bzw. 27) angeordnet, welches in Abhängigkeit von der Geschwindigkeit des zugeordneten Antriebskolbens (16 bzw. 17) gesteuert wird, und
- an jedem Hydraulikkreis sind Druckrückführungsleitungen (29, 30) angeschlossen, die zu einem Steuereingang (28) der Pumpe (22) führen und jeweils ein Rückschlagventil (31 bzw. 32) aufweisen, derart, daß als Steuerdruck für die Pumpe (22) stets der höchste, auf einen der Antriebskolben (16 bzw. 17) wirkende Förderdruck herangezogen wird.

**Claim**

1. An apparatus for producing objects from two or more flowable resinous reaction components (A, B), each of which being guided from a store recipient (1, 2) under control of a dosage piston (14, 15) towards a device (MK) mixing the reaction components (A, B), while each one of the dosage pistons (14, 15) is driven by means of a driving piston (16, 17) having its cylindrical area (18, 19) arranged within an associated regulated hydraulic circuit, CHARACTERIZED BY a combination of the following features:
- the hydraulic circuits (24, 26, 33, 35, 38, 40 and 25, 27, 34, 36, 39, 40) are driven in common by a pressure-feed controlled pump (22);
- in each one of the hydraulic circuits a capacity-control valve (26 and 27, respectively) is mounted, said valve being controlled in relationship to the speed of the pertinent driving piston (16 and 17, respectively) and

- to each one of the hydraulic circuits are connected pressure return lines (29, 30) leading to a control inlet (28) of the pump (22) and having a relief valve (31 and 32, respectively) each, such as to always exert the maximum pressure feed effecting one of the driving pistons (16 and 17, respectively) as control pressure for the pump (22).

## Revendication

Installation de production d'objets à partir de deux ou plusieurs composants réactifs fluidifiables (A, B), générateurs d'une matière plastique, qui sont chacun amenés d'un réservoir respectif (1, 2), sous la commande d'un piston doseur (14 ou 15) à un appareil (MK) qui mélange ces composants (A, B), chaque piston doseur (14, 15) étant mû par un piston d'entraînement (16, 17) respectif, dont la chambre (18, 19) est disposée dans un circuit hydraulique réglé respectif, installation caractérisée par la combinaison des particularités suivantes

- les circuits hydrauliques (24, 26, 33, 35, 38, 40 et 25, 27, 34, 36, 39, 40) sont alimentés par une pompe commune (22) à pression de refoulement réglée;

- il est disposé dans chacun de ces circuits hydrauliques un distributeur (26, 27) de réglage du débit, qui est réglé en fonction de la vitesse du piston d'entraînement (16, 17) respectif; et

- il est relié à ces circuits hydrauliques des conduites respectives (29, 30) de retour de fluide sous préssion qui vont à une entrée (28) de réglage de la pompe (22) et comportent chacune une soupape de retenue (31, 32) respective, de façon que ce soit toujours la pression la plus élevée de refoulement agissant sur l'un des pistons d'entraînement (16, 17), qui serve de pression de réglage de cette pompe (22).

0 120 419